# EUROPEAN PATENT APPLICATION

(11) **EP 1 195 291 A2**
(43) Date of publication of application: **10.04.2002**
(21) Application number: 01203283.5
(22) Date of filing: 31.08.2001
(51) Int. Cl.: B60P 1/02

(54) **Loading flap with cable-cylinder combination**

(30) Priority: 03.10.2000 BE 200000624
(71) Applicant: DHOLLANDIA, naamloze vennootschap, 9160 Lokeren (BE)
(72) Inventor: Dhollander, Jan Prudence Jozef, 9111 Belsele (BE); Derie, Pol Jan Lode, 9111 Belsele (BE)
(74) Representative: Donné, Eddy

(57) **Abstract**

The invention relates to a vehicle (1) equipped with a vertical lift (3) which is provided with a loading platform (4), which is attached onto sliding elements (5,6) on either side of the opening of the body (2), which are moved up and down along and/or through columns (7), and whereby said sliding elements are connected to a hoisting mechanism (8). One sliding element (5) is moved up and down by a hydrocylinder (9), and the other sliding element (6) is moved up and down on a cable (12), which is connected to the hydrosliding element (5) with its other end, and is hereby led over cable wheels (15) in such a manner that with every movement of the one sliding element (5), the cable fastening (14) on the one sliding element (5) moves parallel in the same direction as the cable fastening (13) on the other sliding element (6).

## Description

This invention relates to a vehicle equipped with a host of the type of a vertical lift.

Vertical lifts for vehicles which are usually mounted on the rear portal are known, whereby a loading platform can be moved up and down, fixed onto two sliding elements which are moved up and down in columns on either side of the opening of the body by means of a hoisting mechanism. During transport, the loading platform can then for example be placed in a vertical position behind the body. Said hoist can also be provided inside the body, usually without any inclination or fastening function.

The hoisting mechanism usually consists of a cable hoisting system, whereby every sliding element is connected to a hoisting cable which is led to a case or housing in which said two cables are led over cable wheels and a moving ram which is pushed forward as such by means of for example a hydrocylinder.

The cable system is in some cases replaced by a chain system.

These systems are disadvantageous in that a non-compact case or housing is required which occupies a certain amount of space on the opening of the body or inside the body.

Further, they also require a minimal length of said housing in order to be able to cover the required lift distance.

Another hoisting technique consists in hoisting directly with hydrocylinders on both sliding elements.

This requires a parallel running system to make both cylinders move together, irrespective of where the load is situated on the hoist.

Various systems are applied hereby, which always represent disadvantages such as a technique which is too complex, expensive systems, not compact enough, not precise enough, etc.

The invention offers the possibility to remedy the above-mentioned disadvantages by applying a combination of the above-mentioned known techniques in a clever manner which is characteristic of the invention.

For the sake of convenience, we will talk about the use of cables, although also other materials such as chains or other flexible load carriers are included.

The invention opts for a hoisting technique for one of both sliding elements whereby said sliding element (hydrosliding element) is directly or indirectly connected to a hydrocylinder for lowering and hoisting.

The other sliding element (loose sliding element) on the opposite side of the body is directly or indirectly connected to a hoisting cable which is led upward in a hoisting function and led further via cable wheels into a position coming from beneath and meshing directly or indirectly with the sliding element with the hydrocylinder.

Due to the manner in which the cable is led from one side to the other, it will always remain taught in every position or movement of both sliding elements

When the cable fastening on one sliding element is moved, the cable fastening on the other sliding element will move parallel in the same direction at the same speed and over the same distance.

The cable can cover various distances here, two examples of which are given below in the detailed description and drawings.

As already mentioned, the cable can hereby be fastened directly or indirectly to the above-mentioned sliding elements, more precisely to all the parts which move along with the above-mentioned sliding elements, such as for example the loading platform on the side of the respective hydrocylinder, the hydrocylinder, the sliding element, the fastenings of the sliding element to the loading platform or to the hydrocylinder, etc.

When the sliding element on the hydrocylinder pulls up the cable end, the loose sliding element on the other side of the body will be pulled up at the same speed and over the same distance.
The same applies in the opposite sense, when descending.

This technique has for an effect that the loose sliding element goes up and down at the same speed as the sliding element which is connected to the hydrocylinder. This results in a parallel run.

Further, the above-mentioned hydrocylinder may also be another type of lifting jack, and it can also be driven electrically or by means of gas.

Details and characteristics of the invention will appear from the following description in which reference is made to the attached drawings, wherein:
Figure 1 is a schematic representation of a vehicle equipped with a hoist of the type of a vertical lift according to the invention;
Figure 2 is schematic representation similar to the one of figure 1, but relating to another embodiment of the invention.

A vehicle 1 equipped with a hoist of the type of a vertical lift 3, mounted inside or onto its body 2, which vertical lift 3 is provided with a loading platform 4 which is attached onto sliding elements on either side of the opening of the body, which sliding elements are moved up and down along and/or through columns 7 which are connected to the body, and whereby said sliding elements are connected to a hoisting mechanism for moving up and down, whereby the invention is characterised in that one sliding element, called the hydrosliding element 5, is moved up and down by a hydrocylinder 9, and whereby the other sliding element on the opposite side of the body, called the loose sliding element 6, is moved up and down on a cable 12, which cable 12 is connected to the hydrosliding element with its other end, and is hereby led over cable wheels in such a manner that the cable 12 remains taught in every position or with every movement of the hydrosliding element 5, and that the cable fastening 14 on the hydrosliding element 5 moves parallel in the same direction as the cable fastening 13 on the loose sliding element, such that an identical up and down movement of both sliding elements 5 and 6 is obtained.

According to the invention, the above-mentioned cable 12 can be any flexible hoisting element such as a cable or link chain.

According to the invention, the cable fastenings can be attached indirectly to the respective sliding elements via the loading platform or parts which are connected thereto, on the same respective side of the body, and the cable fastening 14 can be connected to the hydrosliding element 5 with the part of the hydrocylinder 9 which moves along with the hydrosliding element 5.

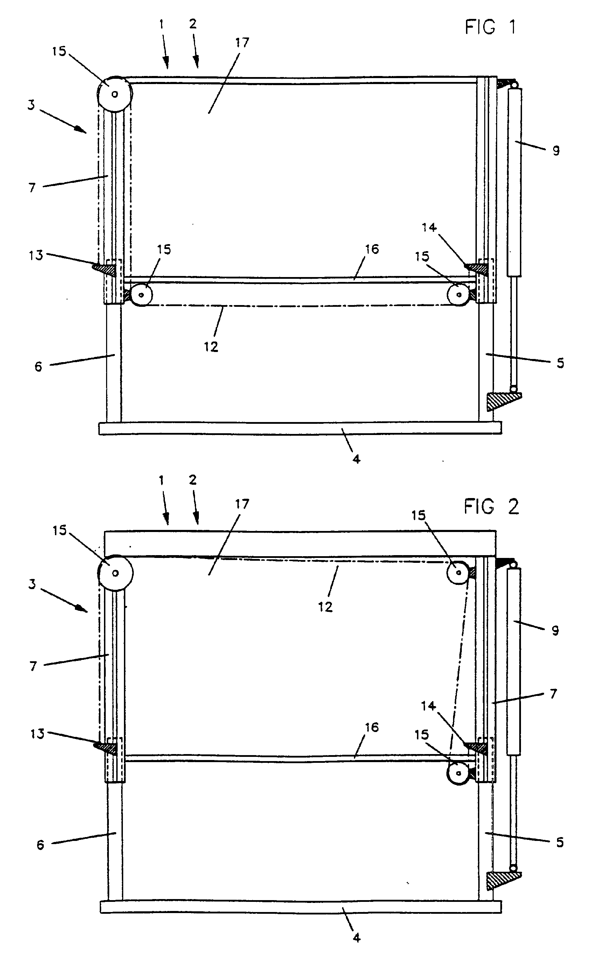

Two examples of the manner in which the cable 12 can be led:
a) after the upward direction as of the cable fastening 13 onto the loose sliding element 6, the cable 12 is rotated 180° over a cable wheel 15 and led to beneath the loading floor 16, where it is led 90° further over a cable wheel 15 and further under the level of the loading floor 16 up to the other side of the body 2, and 90° further over a cable wheel 15 to be led upward to the cable fastening 14 with the hydrosliding element 5, as shown in figure 1.
b) after the upward direction as of the cable fastening 13 onto the loose sliding element 6, up to the top side of the opening 17 of the body 2, the cable 12 is rotated 90° over a cable wheel 15 and led over the opening 17 of the body 2, where it is led 90° further over a cable wheel 15 on the other side of the body 2 and led further down, parallel to the above-mentioned hydrosliding element 5 with the hydrocylinder 9 to beneath the level of its 12 cable fastening 14 with the above-mentioned hydrosliding element 5, where it is led 180° over a cable wheel 15 and upward again up to the cable fastening 14 with the hydrosliding element 5 onto the hydrocylinder 9, as shown in figure 2.

Further, according to the invention, the hydrocylinder 9 can be a pulling cylinder or a double pulling cylinder, or the hydrocylinder 9 can be a pusher cylinder or a telescopic pusher cylinder, or an electric jack.

## Claims

1. A vehicle (1) equipped with a hoist of the type of a vertical lift (3), mounted inside or onto its body (2), which vertical lift (3) is provided with a loading platform (4) which is attached onto sliding elements (5,6) on either side of the opening (17) of the body (2), which sliding elements (5,6) are moved up and down along and/or through columns (7) which are connected to the body (2), and whereby said sliding elements (5,6) are connected to a hoisting mechanism (8) for moving up and down, **characterised in that** one sliding element, called the hydrosliding element (5), is moved up and down by a hydrocylinder (9), and whereby the other sliding element on the opposite side of the body (2), called the loose sliding element (6), is moved up and down on a cable (12), which cable (12) is connected to the hydrosliding element (5) with its other end, and is hereby led over cable wheels (15) in such a manner that the cable (12) remains taught in every position or with every movement of the hydrosliding element (5), and such that the cable fastening (14) on the hydrosliding element (5) moves parallel in the same direction as the cable fastening (13) on the loose sliding element (6), such that an identical up and down movement of both sliding elements (5 and 6) is obtained.

2. Vehicle according to claim 1, **characterised in that** the above-mentioned cable (12) can be any flexible hoisting element such as a cable or link chain.

3. Vehicle according to claim 1 or 2, **characterised in that** the cable fastenings (13,14) are attached indirectly to the respective sliding elements (5,6) via the loading platform (4) or parts which are connected thereto, on the same respective side of the body (2).

4. Vehicle according to any one of the preceding claims, **characterised in that** the cable fastening (14) is connected to the hydrosliding element (5) with the part of the hydrocylinder (9) which moves along with the hydrosliding element (5) or a fastening element thereof.

5. Vehicle according to any one of the preceding claims, **characterised in that** after the upward direction as of the cable fastening (13) onto the loose sliding element (6), the cable (12) is rotated 180° over a cable wheel (15) and led to beneath the loading floor (16), where it is led 90° further over a cable wheel (15) and further under the level of the loading floor (16) up to the other side of the body (2), and 90° further over a cable wheel (15) to be led upward to the cable fastening (14) with the hydrosliding element (5).

6. Vehicle according to any one of the preceding claims, **characterised in that** after the upward direction as of the cable fastening (13) onto the loose sliding element (6), up to the top side of the opening (17) of the body (2), the cable (12) is rotated 90° over a cable wheel (15) and led over the opening (17) of the body (2), where it is led 90° further over a cable wheel (15) on the other side of the body (2) and led further down, parallel to the above-mentioned hydrosliding element (5) with the hydrocylinder (9) to beneath the level of its cable fastening (14) with the above-mentioned hydrosliding element (5), where it is led 180° over a cable wheel (15) and upward again up to the cable fastening (14) with the hydrosliding element (5) onto the hydrocylinder (9).

7. Vehicle according to any one of the preceding claims, **characterised in that** the hydrocylinder (9) is a pulling cylinder.

8. Vehicle according to any one of claims 1 to 6, **characterised in that** the hydrocylinder (9) is a double pulling cylinder.

9. Vehicle according to any one of claims 1 to 6, **characterised in that** the hydrocylinder (9) is a pusher cylinder.

10. Vehicle according to any one of claims 1 to 6,
**characterised in that** the hydrocylinder (9) is a telescopic pusher cylinder.

11. Vehicle according to any one of claims 1 to 6, **characterised in that** the hydrocylinder (9) is an electric jack.
